# EUROPÄISCHE PATENTSCHRIFT

(11) **EP 3 691 822 B1**
(45) Veröffentlichungstag und Bekanntmachung des Hinweises auf die Patenterteilung: **20.08.2025**
(21) Anmeldenummer: 18785825.3
(22) Anmeldetag: 22.09.2018
(51) Int. Cl.: B23K 9/16, B23K 9/10, B23K 9/32, B23K 37/02

(54) **SCHWEISSSTROMQUELLENGEHÄUSE**
WELDING POWER SOURCE HOUSING
CAISSE DE SOURCE DE COURANT POUR LE SOUDAGE

(30) Priorität: 22.09.2017 DE 102017009141
(43) Veröffentlichungstag der Anmeldung: 12.08.2020
(73) Patentinhaber: SKS Welding Systems GmbH, 67661 Kaiserslautern (DE)
(72) Erfinder: KLEIN, Thomas, 67688 Rodenbach (DE)
(74) Vertreter: Mooser, Sebastian Thomas
(86) Internationale Anmeldenummer: PCT/EP2018/000444
(87) Internationale Veröffentlichungsnummer: WO 2019/057332

(56) Entgegenhaltungen:
- DE-U- 1 747 118
- JP-A- H0 970 662
- JP-A- S56 131 084
- US-A- 5 734 148
- US-A1- 2005 258 155
- US-A1- 2008 146 064
- US-A1- 2010 051 595
- US-B1- 6 225 596
- US-B1- 7 241 973

## Beschreibung

Die Erfindung betrifft eine Lichtbogenschweißstromquelle zur Versorgung eines Lichtbogenschweißbrenners mit elektrischem Strom und elektrischer Spannung zur Durchführung eines Lichtbogenschweißverfahrens, wobei die Lichtbogenschweißstromquelle mit einem Gehäuse versehen ist, in welcher eine Stromtransformationseinrichtung zur Aufbereitung von in die Schweißstromquelle eingespeisten elektrischen Strom zur Eignung bei einem Lichtbogenschweißverfahren, versehen ist, am Gehäuse der Lichtbogenschweißstromquelle ferner zwei Polkontakteinrichtungen vorgesehen sind, welche aus dem Gehäuse jeweils entlang unterschiedlicher Längsachsen herausragen und mit Verbindungsmittel zur Aufnahme eines Schweißstromkabels versehen sind (siehe beispielsweise US 6 225 596 B1).

Es existiert eine Vielzahl von unterschiedlichen Schweißverfahren. Die vorliegende Erfindung hat besondere Bedeutung für die verschiedenen Verfahren des Lichtbogenschweißens. Diese basieren auf einer Hitzeentwicklung eines elektrischen Lichtbogens zwischen einer Schweißelektrode und einem Werkstück, an dem eine Schweißung vorgenommen werden soll. Durch die Hitzeentwicklung kann der bzw. können die zu schweißenden Werkstoffe lokal aufgeschmolzen werden. Bei nahezu sämtlichen Lichtbogenschweißverfahren wird dem Bereich des Lichtbogens hierzu ein Schutzgas zugeführt, um einerseits eine widerstandssenkende ionisierte Atmosphäre zwischen der Schweißelektrode und dem Werkstück zu ermöglichen und um andererseits eine Oxidation der Schweißelektrode und des Werkstücks zu verhindern. Anstelle eines hierbei als Schutzgas vorgesehenen Inertgases kann auch ein Aktivgas oder eine Mischform zugeführt werden, das zur Reaktion dient. Ebenso können Elektroden vorgesehen sein, die keine externe Gaszuführung benötigen, da die hierfür erforderlichen Substanzen in den Elektroden integriert sind und beim Abschmelzen der Elektroden freigesetzt werden.

Ein Lichtbogen-Schweißbrenner ist üblicherweise derart ausgelegt, daß ein Benutzer oder ein Roboter einen Metallschweißdraht, der auch als Metallzusatzwerkstoff bezeichnet werden kann, auf eine spezifizierte Fügestelle auf dem Zielmetallstück richten kann. Der Schweißdraht wird durch den Schweißbrenner geführt und schließlich durch eine Öffnung in der Kontaktdüse am Ende des Schweißbrenners zum Zielmetallstück transportiert.

Bei Anlegen einer elektrischen Spannung an einem Schweißbrennerinnenrohr und beim Kontaktieren des Schweißdrahtes mit dem Zielmetallstück, fließt ein hoher elektrischer Strom von einem Schweißbrennerinnenrohr über einen sogenannten Düsenstock, dann über die Kontaktdüse, über den Schweißdraht und gegebenenfalls einem Lichtbogen zum Zielmetallstück und dann zur Masse. Der hohe Strom und der Lichtbogen verursachen das Schmelzen des Schweißdrahtes in einer Schutzgasatmosphäre, was zur Tropfenbildung des Drahtes und zum Entstehen eines Lichtbogens führt.

Dieser Lichtbogen schmilzt das Metall der Zielmetallstücke und den nachgeführten Schweißdraht. Durch Abfallen der entstanden Tropfen des Schweißdrahtes oder durch Übergabe des Tropfens im Kurzschluss auf die verflüssigte Stelle der Zielmetallstücke, werden diese miteinander verbunden.

Lichtbogenschweißanlagen - bzw. Lichtbogenschweißstromkreise sind zur Bereitstellung des erforderlichen elektrischen Stroms und der Spannung jeweils mit einer Schweißstromquelle versehen, mit welcher der Schweißbrenner der Lichtbogenschweißanlage elektrisch leitend verbunden werden muß, damit der jeweiligen Lichtbogenschweißstelle Strom zugeführt und an sie eine Spannung angelegt werden kann. Diese Verbindung wird üblicherweise mittels Schweißstromkabeln erzeugt, wobei für jeden der beiden Pole der jeweiligen Schweißstromquelle ein Schweißstromkabel vorgesehen ist. Neben einem Anschluß am Schweißbrenner und einem Anschluß am Werkstück muß somit das jeweilige Schweißstromkabel auch an der Schweißstromquelle angeschlossen werden. Sofern aufgrund des jeweiligen Schweißverfahrens Schweißmedien, wie beispielsweise Schutzgas und/oder ein Schweißdraht, der Prozeßstelle zugeführt werden sollen, so kann dies ebenfalls durch eines der beiden Schweißstromkabel erfolgen, insbesondere mittels eines Koaxialschweißstromkabels, das eine mittige Durchführung für Schweißmedien aufweist. Die vorliegende Erfindung betrifft sowohl Schweißstromkabel ohne als auch mit integrierter Medienzuführung.

Aus der JP-S65 131084 A geht eine Schweißstromquelle mit einem näherungsweise quaderförmigen Gehäuse hervor, an dessen Vorderseite sich an einer senkrecht ausgerichteten Bedienungsfrontwand zwei Polkontakteinrichtungen zur Aufnahme von jeweils einem Schweißstromkabel, die aus der Bedienungsfrontwand und damit aus dem Gehäuse herausragen, befinden. Die Polkontakteinrichtungen stehen über die Bedienungsfrontwand über und ihre Achsen verlaufen parallel zu einer Aufstandsfläche, auf welcher die Schweißstromquelle mit ihren Rollen angeordnet sind.

Die DE 17 47 118 U zeigt eine Art Adapter, der dazu dienen soll, die bei Schweißstromkabelverbindungen mit einer Schweißstromquelle oftmals erforderlichen drehenden oder schwenkenden Bewegungen mit den Kabelenden an Anschlußbolzen der Schweißstromquelle zu vermeiden, da hierbei sich die an Anschlußbolzen angeschraubten Muttern und damit die an Anschlußbolzen angebrachten Verbindungsmitteln lösen, was zu Kontaktschwierigkeiten oder Kontaktverbrennungen und dadurch zu Betriebsstörungen führen kann. Die adapterartige Anschlußvorrichtung soll deshalb an Anschlußbolzen einer Schweißstromquelle bzw. an Kabelenden angebrachte Verbindungsmittel aufweisen, die miteinander starr aber gegebenenfalls in der Verbindung drehbar verbunden sind und selbst Aufnahmen für die Schweißstromkabeln aufweisen.

Die US 2005/258155 A1 betrifft ein tragbares Handschweißgerät, das ein Schweißgerätgehäuse aufweist. Das Schweißgerätgehäuse hat vertikale Endflächen vorne und hinten sowie linke und rechte Seitenflächen. Das Gehäuse hat ferner eine horizontale Oberseite, die sich von der Rückseite nach vorne erstreckt und an der sich ein Tragegriff befindet. Als Polkontakte sind zwei aus dem Gehäuse herausragende Kabel vorgesehen, an deren Enden sich Kontaktklemmzangen befinden.

Aus der US 5 734148 A geht eine Schweißstromquelle mit einem Gehäuse hervor, das einfachen Zugriff auf verschiedene im Gehäuse angeordnete Bestandteile der Schweißstromquelle ermöglichen soll. An welcher Stelle Polkontakte für den Anschluß von Schweißstromkabeln vorgesehen sind, geht aus der US 5 734 148 A nicht hervor.

Die US 7 241 973 B1 zeigt ein Handgeschweißgerät, dessen Gehäuse zusammen mit am Gehäuse befestigbaren Schweißgasflaschen verfahrbar ist. Seitlich am Gehäuse ist eine Anschlußbox vorgesehen, aus der horizontal ausgerichtete Polkontakteinrichtungen herausragen. Werden an die Polkontakteinrichtungen Schweißstromkabel angeschlossen, verlaufen diese neben dem Gehäuse horizontal und vergrößern damit den Platzbedarf des Handschweißgeräts.

Zur Kontaktierung der Schweißstromquelle mit den Schweißstromkabeln weist die Schweißstromquelle zwei Polkontakteinrichtungen auf. Weit verbreitet sind hierbei solche Polkontakteinrichtungen, wie sie in der Norm DIN EN 60974-12 definiert und beschrieben sind. Es handelt es sich hierbei im wesentlichen um einen aus dem Gehäuse der jeweiligen Schweißstromquelle herausragendem Kontaktstift, der an seiner Umfangsfläche mit einer Nut versehen ist, in die ein Zapfen eines Steckers des Schweißstromkabels eingreift. Nachdem der Zapfen in die Nut eingeführt ist, wird durch eine Rotationsbewegung des Steckers und der damit verbundenen Bewegung des Zapfens in der Nut eine Verbindung zwischen dem Kontaktstift und dem Stecker erzeugt. An solchen vorbekannten Lösungen kann als nachteilig gesehen werden, daß die Polkontakte vom Gehäuse der jeweiligen Schweißstromquellen ab- und überstehen. Infolgedessen stehen auch die an die Polkontakte angeschlossenen Schweißstromkabel von der Schweißstromquelle ab. Diese abstehenden Kabel sind häufig im Weg und vergrößern den von der Schweißstromquelle benötigten Platzbedarf.

Der Erfindung liegt deshalb die Aufgabe zugrunde, eine Möglichkeit zu schaffen, um Kollisionen mit an eine Schweißstromquelle der eingangs genannten Art angeschlossenen Schweißstromkabel möglichst zu vermeiden.

Diese Aufgabe wird bei einer Schweißstromquelle der eingangs genannten Art erfindungsgemäß durch eine Schweißstromquelle gemäß Anspruch 1 gelöst.

Mit der Erfindung ist vorgesehen, daß beide Polkontakteinrichtungen der erfindungsgemäßen Schweißstromquelle sich vollständig innerhalb der Projektionsfläche der Schweißstromquelle befinden. Die Polkontakteinrichtungen sollten somit erfindungsgemäß nicht über die durch das Gehäuse vorgegebenen äußeren Kontur überstehen. Hierdurch wird nicht nur ein Überstand von Schweißstromkabeln mit Anschlußelementen über das Gehäuse und gegebenenfalls über seines ein- oder mehrteiligen Aufstellelements hinaus und damit auch die Beschädigungsgefahr zumindest verringert, es wird auch gleichzeitig die erforderliche Stellfläche, der sogenannte Footprint, einer Schweißstromquelle in einer industriellen Umgebung, wie beispielsweise einer Produktionshalle, verringert. Insbesondere im industriellen Umfeld beim Einsatz von Lichtbogenschweißautomaten, ist es üblich, in einer Produktionshalle eine Vielzahl von Schweißfertigungszellen aufzustellen. Jede solcher Schweißfertigungszellen kann zumindest eine Schweißstromquelle aufweisen. Durch eine Vielzahl von erfindungsgemäß ausgebildeten Schweißstromquellen kann somit der Platzbedarf einer Produktionsanlage verringert und damit die Möglichkeit geschaffen werden, in einer Produktionshalle zusätzliche Schweißfertigungszellen aufzustellen. Eine bessere Auslastung einer Produktionshalle bedeutet eine Verringerung der Produktionskosten.

Hierdurch lassen sich die erfindungsgemäßen Vorteile einer Verringerung des Platzbedarfs und einer Verringerung der Kollisionsgefahr mit Schweißstromkabel in besonderem Umfang und Konsequenz erzielen.

Eine bevorzugte Ausführungsform der Erfindung kann sich durch eine Ausrichtung einer Längsachse von zumindest einer der Polkontakteinrichtungen auszeichnen, bei der die Längachse der Polkontakteinrichtung mit einer Senkrechten auf die Aufstellfläche einen Winkel aus einem Bereich von 0° bis 45° einschließt.

Erfindungsgemäß ist vorgesehen, dass die Polkontakteinrichtungen mit Verbindungsmitteln versehen sind, die zur Erzeugung und zur Fixierung einer lösbaren Verbindung der Polkontakteinrichtung mit einem Schweißstromkabel unter Einsatz einer Rotationsbewegung eines Verbindungsmittels um eine Längsachse der Polkontakteinrichtung vorgesehen sind, wobei die Längsachse derart aus dem Gehäuse der Schweißstromquelle austritt, dass die Längsachse vom Gehäuse aus in Richtung auf die Ebene der Aufstandsfläche ausgerichtet ist. Somit hat die jeweilige Polkontakteinrichtung eine Ausrichtung ihrer Längsachse, bei der zumindest eine Komponente des räumlichen Verlaufs der Längsachse vertikal zur Aufstellfläche des Gehäuses ausgerichtet ist. Durch eine schräg in Richtung zur Aufstellfläche, oder besonders bevorzugt, senkrecht in Richtung zur Aufstandsfläche, verlaufenden Längsachse der jeweiligen Polkontakteinrichtung, kann nicht nur der Platzbedarf für eine Schweißstromquelle und an diese angeschlossene Schweißstromkabel möglichst gering gehalten werden, es kann vielmehr auch eine ergonomisch günstige Handhabung bei der Befestigung und Entfernung eines Schweißstromkabels erreicht werden. Zudem kann der Verlauf der Schweißstromkabel im Bereich der Schweißstromquellen möglichst nahe an der Schweißstromquelle gehalten werden, wodurch die Gefahr von Kollisionen mit Polkontakteinrichtungen und den daran angeschlossenen Schweißstromkabeln verringert wird. Insbesondere bei einer besonders bevorzugten Weiterbildung der Erfindung, mit einer senkrecht zur Aufstandsfläche ausgerichteten Längsachse der zumindest einen, vorzugsweise beider, Polkontakteinrichtungen, sind die vorgenannten Vorteile besonders ausgeprägt.

An die zumindest eine Polkontakteinrichtung, vorzugsweise sind an beide Polkontakteinrichtungen, jeweils ein Schweißstromkabel mittels einer Kontaktierungs- und Verbindungseinrichtung des jeweiligen Schweißstromkabels angeschlossen. Die jeweilige Kontaktierungs- und Verbindungseinrichtung ist in geeigneter Weise ausgebildet, um zwischen dem Schweißstromkabel und der Polkontakteinrichtung eine lösbare mechanische Verbindung sowie einen elektrischen Kontakt zu erzeugen.

Die Polkontakteinrichtung, insbesondere deren Ausrichtung und Position am Gehäuse, sowie das Gehäuse selbst, sind gemäß einer bevorzugten Ausführungsform der Erfindung derart ausgebildet, daß sich das jeweils daran angeschlossene Schweißstromkabel ebenfalls innerhalb des Footprints des Gehäuses befindet und erst an einer vorbestimmten Stelle mit Abstand zur Polkontakteinrichtung und zur Kontaktierungs- und Verbindungseinrichtung, aus dem Footprint des Gehäuses herausgeführt wird. Insbesondere die Kontaktierungs- und Verbindungseinrichtung des jeweiligen Schweißstromkabels sollte sich somit ebenfalls innerhalb der (senkrechten) Projektion des Gehäuses auf die Aufstellfläche der Schweißstromquelle befinden und damit nicht über das Gehäuse überstehen.

Um eine gute Zugänglichkeit für einen Schweißstromkabelanschluß zur zumindest einen erfindungsgemäßen Polkontakteinrichtung zu ermöglichen, kann in einer weiteren bevorzugten erfindungsgemäßen Ausführungsform der Erfindung vorgesehen sein, daß das Gehäuse zumindest einen unteren Abschnitt und zumindest einen oberen Abschnitt aufweist, wobei der obere Abschnitt einen größeren Abstand als der untere Abschnitt des Gehäuses zur Ebene der Aufstandsfläche aufweist und der obere Abschnitt über den unteren Abschnitt auskragt. Zumindest eine der Polkontakteinrichtungen kann sich hierbei an einer mit Abstand zur Aufstandsfläche befindlichen Unterseite des oberen Abschnitts des Gehäuse befinden. Hierdurch ist die jeweilige Polkontakteinrichtung und ein daran angeschlossenes Schweißstromkabel gut zugänglich und trotzdem durch das Gehäuse geschützt.

In einer weiteren bevorzugten Ausführungsform der Erfindung kann der obere Abschnitt des Gehäuses gegenüber dem unterhalb dieses Gehäuseteils angeordneten unteren Gehäuseteils auf zwei Seiten des oberen Gehäuseteils jeweils auskragen bzw. überstehen. Hierdurch ergibt sich die vorteilhafte Möglichkeit, daß an jeder der beiden auskragenden Seiten des oberen Abschnitts des Gehäuses, insbesondere an deren Unterseiten, jeweils eine der beiden Polkontakteinrichtungen angeordnet werden kann. Damit kann auch auf besonders einfache Weise einer Verwechslung der beiden Polkontakteinrichtungen beim Anschluß eines Schweißstromkabels entgegen gewirkt werden, da die beiden Polkontakteinrichtungen einen relativ großen Abstand zueinander aufweisen und durch den unteren Abschnitt des Gehäuses räumlich voneinander getrennt sind.

Die mit der Erfindung erzielbaren Vorteile können durch eine bevorzugte Weiterbildung der Erfindung durch zumindest eine am Gehäuse angeordnete Kabelführung für zumindest ein Schweißstromkabel, weiter gesteigert werden. Mit einer solchen Kabelführung kann es insbesondere vorgesehen sein, zumindest eines der Schweißstromkabel möglichst innerhalb des Footprints zu einer bestimmten Stelle zu führen, an welcher das Schweißstromkabel aus dem Footprint austritt. Besonders günstig kann es hierbei sein, wenn eine Kabelführung derart am Gehäuse angeordnet und ausgerichtet ist, daß mit der Kabelführung ein Schweißstromkabel zur Rückseite des Gehäuses führbar ist. Da Schweißstromquellen üblicherweise an ihrer Frontseite bedient werden, kann mit einer Führung des zumindest einen Schweißstromkabels zur Rückseite des Gehäuses besonders sicher eine Kollision einer Bedienperson mit einem Schweißstromkabel verhindert werden. Ähnliches gilt für eine Kabelführung, mit welcher insbesondere bei einer mit Abstand zu einem Untergrund aufgehängten Schweißstromquelle zumindest eines der Schweißstromkabel zur Unterseite der Schweißstromquelle führbar ist.

Weitere bevorzugte Ausgestaltungen der Erfindung ergeben sich aus den Ansprüchen, der Beschreibung und den Figuren der Zeichnung.

Die Erfindung wird anhand von in den Figuren rein schematisch dargestellten Ausführungsbeispielen näher erläutert, es zeigen:
- Fig. 1: eine perspektivische Darstellung einer Schweißstromquelle für Lichtbogenschweißverfahren mit an deren zwei Polkontakteinrichtungen angeschlossenen Schweißstromkabel;
- Fig. 2: eine Explosionsdarstellung einer Polkontakteinrichtung der Schweißstromquelle;
- Fig. 3: eine Schnittdarstellung durch eine Polkontakteinrichtung gemäß Fig. 2;
- Fig. 4: eine Explosionsdarstellung einer Kontaktierungs- und Verbindungseinrichtung eines Schweißstromkabels;
- Fig. 5: eine Schnittdarstellung der Kontaktierungs- und Verbindungseinrichtung aus Fig. 4;
- Fig. 6: eine Schnittdarstellung einer Kontaktierungs- und Verbindungseinrichtung, in welche eine Zuführeinrichtung für Schutzgas integriert ist;
- Fig. 7: ein als Verlängerungskabel ausgebildetes Schweißstromkabel, das an seinen beiden Enden mit einem Buchsenanschluß und einem Steckeranschluß versehen ist, in einer Schnittdarstellung, in einer Seitenansicht und in einer perspektivischen Darstellung;
- Fig. 8a: in einer Schnittdarstellung einen Endabschnitt eines Schweißstromkabels, zusammen mit einem Teil einer auf das Schweißstromkabel abgestimmten Polkontakteinrichtung;
- Fig. 8b: in einer Schnittdarstellung einen Endabschnitt eines weiteren Schweißstromkabels zusammen mit einem Teil einer auf das Schweißstromkabel abgestimmten Polkontakteinrichtung;
- Fig. 9: ein Teil eines Aufstellelements für das Gehäuse der Schweißstromquelle;
- Fig. 10: die Schweißstromquelle aus Fig. 1 in einer Vorderansicht;
- Fig. 11: die Schweißstromquelle aus Fig. 1 und 10 in einer Seitenansicht;
- Fig. 12: die Schweißstromquelle aus Fig. 1 mit einer geänderten Kabelführung in einer Vorderansicht;
- Fig. 13: die Schweißstromquelle aus Fig. 12 in einer Seitenansicht.

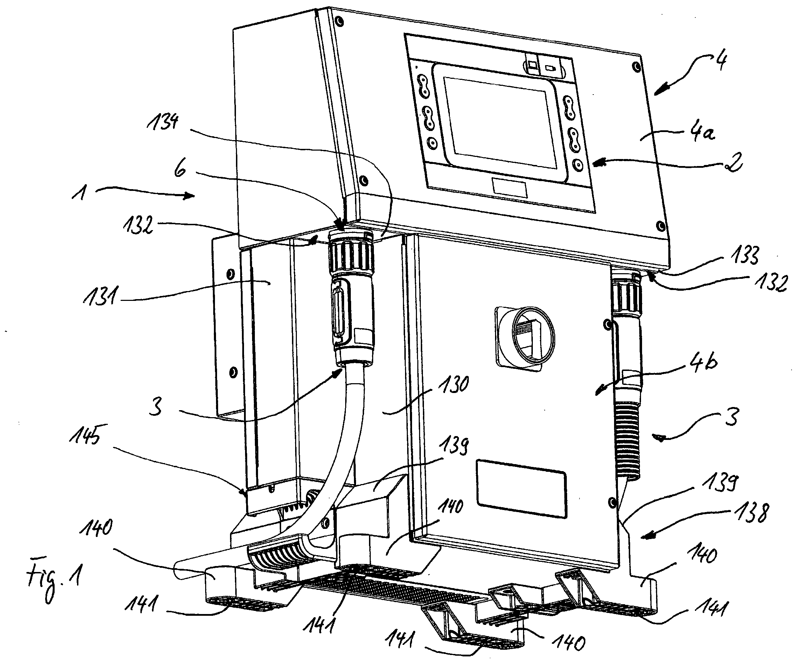

In Fig. 1 ist eine Schweißstromquelle 1 gezeigt, mit der elektrischer Strom und eine elektrische Spannung für die Durchführung von Lichtbogenschweißverfahren mittels eines nicht näher dargestellten Lichtbogenschweißbrenners zur Verfügung gestellt werden. Außerdem enthält die Schweißstromquelle 1 eine Steuerungseinrichtung mit einem Bedienpanel 2, mit welcher Parameter des jeweils durchzuführenden Lichtbogenschweißverfahrens eingestellt und der Schweißprozeß gesteuert werden kann. Vorliegend können mit der Schweißstromquelle 1 beispielsweise MIG/MAG oder auch WIG-, Plasma-, Elektroden- sowie sämtliche weiteren Lichtbogenschweißverfahren oder Hochstromanwendungen ausgeführt werden. In weiteren möglichen Ausführungsformen der Erfindung können auch andere Lichtbogenschweiß- und -trennverfahren ausgeführt werden. Die nachfolgend erörterte bevorzugte Ausführungsform eines Schweißstromkabels 3 und seiner Verbindung mit der Schweißstromquelle 1 können hierbei ebenfalls zur Anwendung kommen.

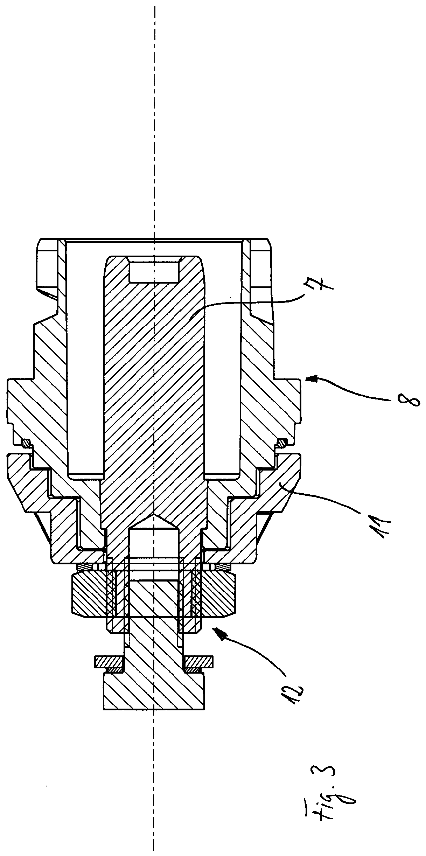

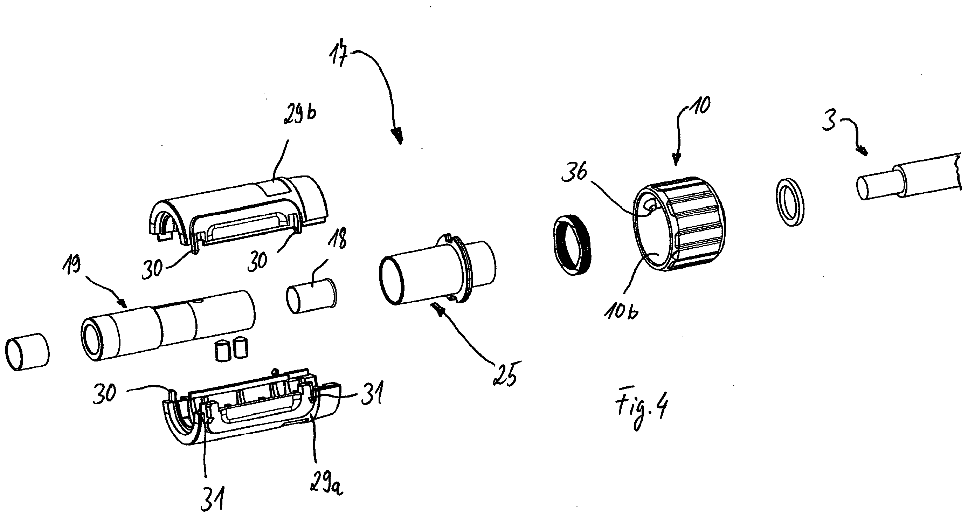

Aus einem Gehäuse 4 der Schweißstromquelle 1 ragen zwei Polkontakteinrichtungen 5, 6 heraus, die zum Anschluß von jeweils einem Schweißstromkabel 3 vorgesehen und in Fig. 1 durch eine Überwurfmutter 10 des Schweißstromkabels 3 verdeckt sind. Die Polkontakte der Polkontakteinrichtungen 5, 6 sind jeweils in Form eines als im wesentlichen zylindrischen Kontaktstifts 7 ausgebildet. Der jeweilige Kontaktstift 7 ist in einer zentrischen Ausnehmung eines Gehäuseteils 8 der jeweiligen Polkontakteinrichtung 5, 6 angeordnet (Fig. 3). An einer Stirnseite 7a des jeweiligen Polkontakts, hier des Kontaktstifts 7, ist eine Kontaktfläche ausgebildet. Insbesondere eine Mantelfläche 7b des Kontaktstifts 7 und gegebenenfalls die Stirnseite 7a können zum elektrisch leitenden Kontakt mit einem oder mehreren schweißstromkabelseitigen Kontaktelementen vorgesehen sein, beispielsweise nicht näher dargestellte Kontaktlamellen. Da der Kontaktstift 7 insgesamt aus einem elektrisch leitenden Werkstoff, insbesondere aus Kupfer oder einer Kupferlegierung hergestellt ist, ist er an seiner gesamten äußeren Hüll- bzw. Umfangsfläche in der Lage, ein elektrisch leitender Kontaktpartner zu sein. Das Gehäuseteil 8 ist mit Abschnitten unterschiedlicher Durchmesser ausgebildet, wobei sich der Abschnitt 8a mit dem größten Durchmesser in Bezug auf eine Längsachse des Gehäuseteils 8 etwa mittig befindet. In Richtung zum Gehäuse der Schweißstromquelle hin schließt sich ein weiterer Abschnitte 8b an, der einen kleineren Durchmesser als der erste Abschnitt 8a aufweist. Ein dritter Abschnitt 8c ist zur übergreifenden Anordnung einer stromkabelseitigen Überwurfmutter 10 (Fig. 4) auf diesem dritten Abschnitten 8c vorgesehen. Auf dem zweiten Abschnitt 8b ist die Anordnung eines hinteren Gehäuseteils 11 vorgesehen ist, das im Ausführungsbeispiel in Form einer Kappe ausgebildet ist. Mit dem hinteren Gehäuseteil 11 und weiteren Befestigungsmitteln 12 wird der Kontaktstift 7 am Gehäuseteil 8 lösbar befestigt.

Die Stirnfläche 7a ist an einem Endabschnitt des Kontaktstifts 7 ausgebildet, der einen geringeren Durchmesser aufweist als der ihm vorausgehende Abschnitt des Kontaktstifts 7. Der besagte vorausgehende Abschnitt dient somit als Anschlag für die Positionierung des Kontaktstifts 7 im Gehäuseteil 8.

Das Gehäuseteil 8 weist an seiner äußeren Mantelfläche des dritten Abschnitts 8c zwei am Umfang um 180° zueinander versetzt angeordnete identische nutförmige Ausnehmungen 14 mit zumindest in etwa konstanter Tiefe und Breite auf, die entlang eines Teils des Umfangs des Abschnitts 8c entlang laufen. Die nutförmigen Ausnehmungen 14 sind an der Stirnseite 15 des Gehäuseteils offen und verlaufen zunächst in etwa parallel zur Längsachse des Gehäuseteils 8. Im weiteren Verlauf der Nuten 14 bewegen sich die Nuten 14 jeweils mit einer Verlaufskomponente in Umfangsrichtung, auch auf den Abschnitt 8a mit dem größten Durchmesser zu, um sich dann - ebenfalls mit einer Verlaufskomponente in Umfangsrichtung - wieder der Stirnseite 15 des Gehäuseteils 8 zu nähern. Der auch in Umfangsrichtung verlaufende Abschnitt der Nuten 14 weist in der bevorzugten Ausführungsform näherungsweise eine V-Form auf, wobei die beiden Schenkel der näherungsweisen V-Form in axialer Richtung zumindest ungefähr gleich lange Komponenten und in radialer Richtung jedoch unterschiedlich lange Komponenten aufweisen.

Wie in Fig. 4 dargestellt ist, ist das Schweißstromkabel 3 an seinem ein Stück weit abisolierten schweißstromquellenseitigen Ende mit einer Kontaktierungs- und Verbindungseinrichtung 17 versehen. Eine Aderendhülse 18 der Kontaktierungs- und Verbindungseinrichtung 17 ist auf die Litzen des abisolierten Kabels 3 aufgeschoben. Die Aderendhülse 18 wird von einer als Kontaktierungsmittel des Schweißstromkabels vorgesehenen Kontaktbuchse 19 umgeben, die Aderendhülse 18 befindet sich hierzu in einer stirnseitig vorgesehenen Sacklochbohrung 19a der Kontaktbuchse 19. Auch an ihrer anderen, der stromquellenseitigen Stirnseite, weist die Kontaktbuchse 19 eine Sacklochbohrung 19b auf. Ein stirnseitiges Ende dieser Sacklochbohrung 19b weist einen zentrischen Zapfen 20 auf, durch den der zur Anordnung in der Sacklochbohrung vorgesehene Kontaktstift 7 zentriert wird.

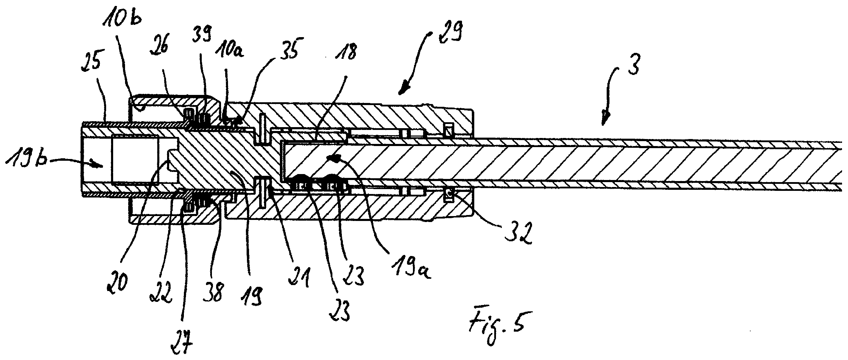

An seiner äußeren, zumindest im wesentlichen zylindrischen Mantelfläche weist die Kontaktbuchse 19 zwei Sacklochausnehmungen 21 (Fig.5) auf, die sich - in Längsrichtung gesehen - zwischen den beiden Sacklochbohrungen 19a, 19b befinden. Außerdem weist die Kontaktbuchse 19 an ihrer äußeren Mantelfläche einen Absatz 22 auf, der sich - wiederum in Längsrichtung gesehen - zwischen den Sacklochausnehmungen 21 und dem stromquellenseitigen Ende der Kontaktbuchse befindet. Die Kontaktbuchse 19 ist zusammen mit der Aderendhülse 18 mittels zwei Madenschrauben 23 auf das abisolierte Schweißstromkabel 3 geklemmt.

Auf die metallische, vorzugsweise aus Kupfer oder Kupferlegierungen gefertigte, Kontaktbuchse 19 ist eine elektrisch nicht leitende Isolierhülse 25 aufgeschoben. In ihrer Endposition auf der Kontaktbuchse 19 reicht die Isolierhülse 25 mit ihrer einen Stirnseite bis kurz vor die Sacklochausnehmungen 21 der Kontaktbuchse 19 und mit ihrer anderen Stirnseite bis zum stromquellenseitigen Ende der Kontaktbuchse 19. An ihrer die Ausnehmung der Isolierhülse 25 begrenzenden Innenwand ist letztere mit einem Absatz 26 versehen, der mit dem Absatz 22 der Außenfläche der Kontaktbuchse 19 korrespondiert, so daß ein Einschub der Kontaktbuchse 19 in die Isolierhülse 25 durch den Absatz 26 der Isolierhülse 25 begrenzt ist. Die Isolierhülse 25 liegt sowohl im Bereich des Absatzes 22 als auch - in Längsrichtung gesehen - beidseits des Absatzes 22 gegen die Außenfläche der Kontaktbuchse 19 an. An ihrer äußeren Mantelfläche ist die Isolierhülse 25 mit einem mit Abstand zum schweißkabelseitigen Ende angeordneten ringförmigen Flansch 27 versehen.

Zur Handhabung des Schweißstromkabels 3 ist dieses mit einer Griffhülse 29 als Bestandteil der Handhabungseinrichtung versehen. Die Griffhülse 29 ist auf die Kontaktbuchse 19 und auf das Schweißstromkabel 3 geklemmt. Die Griffhülse 29 umgibt einen Teil der Kontaktbuchse 19 sowie einen Endabschnitt des Schweißstromkabels 3. Die Griffhülse 29 weist zwei Griffschalen 29a, 29b auf, die mittels einer Klickverbindung miteinander verbunden sind. Die beiden Griffschalen 29a, 29b sind hierzu mit mehreren Rasthaken 30 und Ausnehmungen 31 versehen. Die einstückig mit jeweils einer der Griffschalen 29a, 29b verbundenen Rasthaken 30 sind zum Eingriff und Einrasten in jeweils einer der Ausnehmungen 31 vorgesehen. Im Bereich von einem der Enden der Griffhülse weist dieses an seiner Innenfläche eine umlaufende Nut auf, in die ein Dichtring 32 eingesetzt ist, der mit seiner Innenfläche gegen eine äußere Schutz- und Isolationstülle (Mantel) 3a des Schweißstromkabels 3 anliegt.

An ihrem anderen stirnseitigen Ende ist die Griffhülse 29 an ihrer Innenfläche mit einer Ausdrehung 35 der Innenwand versehen. Während die Innenwand auf einem Endbereich der Außenfläche der Isolierhülse 25 aufsitzt, übergreift die durch die Ausdrehung entstandene Begrenzungsfläche der Griffhülse 29 einen Absatz 10a der äußeren Umfangsfläche der Überwurfmutter 10, die sich im Bereich des schweißstromkabelseitigen Endes der Überwurfmutter 10 befindet und einen kleineren Durchmesser aufweist, als die restliche Mantelfläche der im wesentlichen hohlzylindrischförmigen Überwurfmutter 10. Wie insbesondere in Fig. 4 zu erkennen ist, weist die Überwurfmutter 10 an ihrer sonst glatten Innenfläche zwei am Umfang um 180° zueinander versetze identische Nocken 36 auf, deren Größe auf die Höhe und Breite der Nuten 14 des Gehäuseteils 8 derart abgestimmt ist, daß die Nocken 36 in die Nuten 14 angeordnet und möglichst leichtgängig bewegt werden können. Die Nocken 36 befinden sich an der Innenfläche 10b der Überwurfmutter mit geringem Abstand zum stirnseitigen und schweißstromquellenseitigen Ende der Überwurfmutter 10. Die Überwurfmutter 10 weist im Bereich ihres schweißstromkabelseitigen Endes an ihrer Innenfläche einen Absatz zu einem Bereich mit einem ersten verkleinerten Durchmesser auf, an den sich dann ein zweiter nochmals verkleinerter Durchmesserbereich anschließt.

Wie insbesondere Fig. 5 zu entnehmen ist, liegt an der durch die Durchmesserreduzierungen ausgebildeten inneren ringförmigen Stirnfläche 38 ein Federelement 39 an und stützt sich mit einem seiner beide Enden an dieser inneren Stirnfläche 38 ab. Da die Überwurfmutter 10 auf die Isolierhülse 25 aufgeschoben ist, liegt das Federelement 39 mit seinem anderen Ende gegen den Flansch 27 der Isolierhülse 25 an. Weil die Isolierhülse 25 in axialer Richtung auf der Kontaktbuchse 19 fixiert ist, die Überwurfmutter 10 jedoch in axialer Richtung gegen die Federkraft des Federelements 39 zwischen der Griffhülse 29 und dem Flansch 27 der Isolierhülse 25 in axialer Richtung hin und her bewegbar ist, kann mittels einer axialen Bewegung der Überwurfmutter 10 das Federelement 39 gestaucht werden. Ebenso kann durch die Federkraft des gestauchten Federelements 39 die Überwurfmutter 10 in axialer Richtung auf die Griffhülse zubewegt werden, um den festen Sitz im Bajonett in verriegelter Position sicherzustellen.

Um das Schweißstromkabel 3 an der Schweißstromquelle 1 oder einer anderen Schweißstromquelle anzuschließen, kann das Schweißstromkabel 3 an seiner Griffhülse 29 manuell gehandhabt werden. Es sollte dazu die aus der Überwurfmutter 10 herausragende Kontaktbuchse 19 an den Kontaktstift 7 von einer der Polkontakteinrichtungen 5, 6 der Schweißstromquelle 1 herangeführt werden. Die Kontaktbuchse 19 wird dann mit der Sacklochbohrung 19b über den Kontaktstift 7 geführt. Die um ihre eigene Längsachse drehbare Überwurfmutter 10 kann nun ebenfalls durch manuelle Manipulation mit den Nocken 36 so ausgerichtet werden, dass sich die Nocken 36 in axialer Richtung vor der Stirnseite des Gehäuseteils 8 und in Rotationsrichtung an den Eingängen der Nuten 14 befinden. Nun können die Nocken 36 durch eine Bewegung parallel zur Längsachse in die Nuten 14 eingeführt werden. Das Federelement 39 wird hierdurch gespannt. Der jeweilige Nocken 36 kann entlang des weiteren Verlaufs der jeweiligen Nut 14 in dieser geführt werden. Nachdem der jeweilige Nocken 36 den parallel zur Längsachse verlaufenden Abschnitt der jeweiligen Nut 14 abgefahren hat, wird dieser in den näherungsweise V-förmigen Abschnitt der Nut 14 geführt, in welcher der Nocken 36 eine Bewegungen mit einer Komponente in Umfangsrichtung und einer Komponente parallel zur Längsachse ausführt. Die Überwurfmutter 10 wird hierbei in Umfangsrichtung bewegt und führt dabei zunächst gleichzeitig eine weitere Hubbewegung entgegen der Federkraft des Federelements 39 aus. Nachdem der jeweilige Nocken 36 den Scheitelpunkt der V-Form seines Bewegungsverlaufs erreicht hat wird das Federelement bei der Rotationsbewegung und gleichzeitiger geringfügiger Hubbewegung parallel zur Längsachse, aber nun in entgegengesetzter Richtung von der Griffhülse 29 weg, geringfügig entlastet. Die Bajonettverbindung zwischen der Überwurfmutter 10 des Schweißstromkabels 3 und dem Gehäuseteil 8 der Schweißstromquelle 1 ist nun erzeugt. Der vom jeweiligen Nocken 36 zuerst abgefahrene Abschnitt der V-Form, also jener Abschnitt, der zwischen dem achsparallelen Abschnitt der Nut und dem Scheitelpunkt der V-Form verläuft, weist - bei zumindest in etwa gleicher Länge in Längsachsrichtung - eine geringere Steigung als der zweite Abschnitt der V-Form auf. Hierdurch wird zur Überführung des Nockens 36 in seine Rastposition eine geringere Kraft benötigt, als zur Überführung des Nockens 36 aus seiner Rastposition heraus. Durch diese konstruktive Auslegung kann eine zusätzliche Sicherheit gegen ein unbeabsichtigtes Lösen der Bajonettverbindung erreicht werden.

Diese Verbindung zwischen dem Schweißstromkabel 3 und einer der Polkontakteinrichtungen 5, 6 der Schweißstromquelle 1 kann nun nur durch Krafteinwirkung entgegen des vorgespannten Federelements 39 und gleichzeitiger Rotationsbewegung in nun umgekehrter Rotationsrichtung in Richtung des Umfangs des Gehäuseteils 8 wieder gelöst werden.

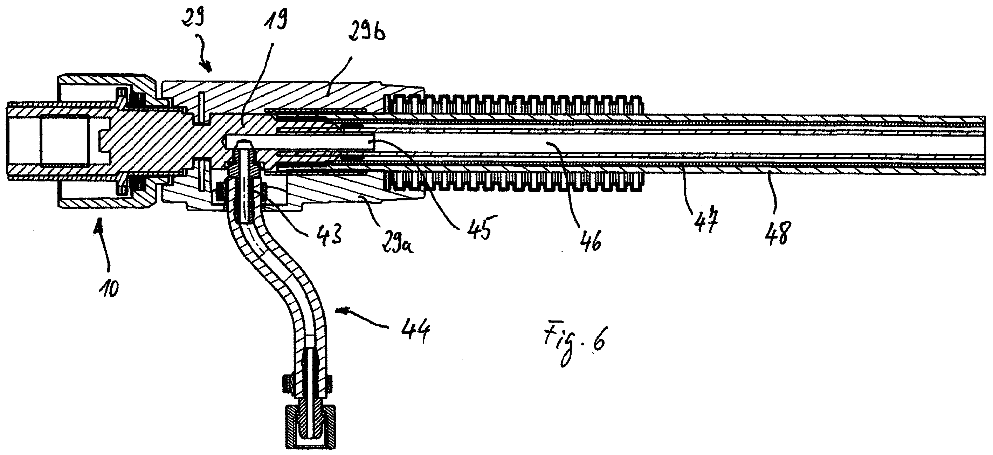

In Fig. 6 ist ein weiteres Ausführungsbeispiel eines Schweißstromkabels 3 gezeigt. Bei dieser Ausführungsform ist unmittelbar hinter der

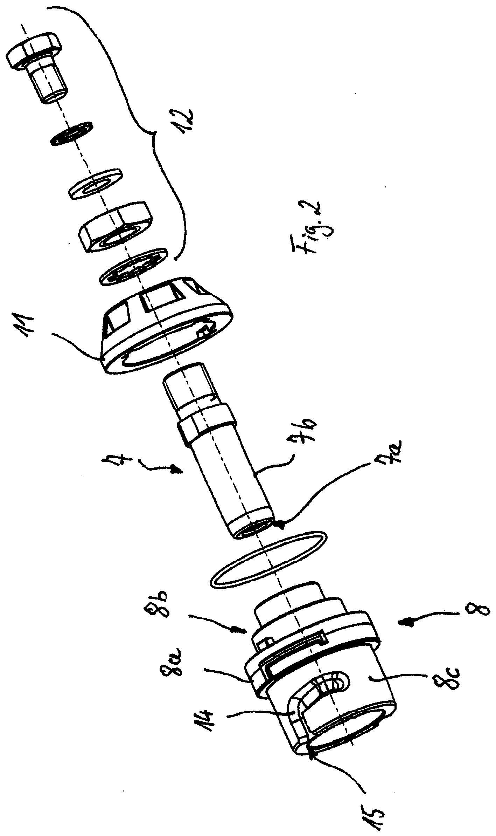

Bajonettverbindung und hinter der Überwurfmutter 10 sowie hinter den Sacklochausnehmungen 21 der Griffhülse 29 eine Medienzuführung 42 für ein Schutzgas, wie beispielsweise Argon, CO₂ oder ein Mischgas, in das Schweißstromkabel 3 integriert, die in eine zentrische Ausnehmung 46 des Schweißstromkabels mündet. Bis auf diesen Aspekt entspricht das Schweißstromkabel aus Fig. 6 dem in den Fig. 2 bis 5 gezeigten und erörterten Schweißstromkabel sowie insbesondere auch der zusammen mit einer Schweißstromquelle erzeugten Bajonettverbindung zwischen dem Schweißstromkabel und der Schweißstromquelle. Nachfolgend wird deshalb nur auf die Unterschiede zur Ausführungsform gemäß den Fig. 2 bis 5 eingegangen.

Eine Schale 29a, 29b der zweiteiligen Griffhülse 29 ist mit einer durch ihre Wand verlaufende Durchführung 43 versehen, an die eine von außen kommende Zuleitung 44 angeschlossen ist. Diese Durchführung 43 führt durch die Griffhülse 29 hindurch in eine Sacklochbohrung 45 der Kontaktbuchse 19 hinein. Die Sacklochbohrung 45 wiederum führt in eine zentrische Ausnehmung 46 mit welcher das Schweißstromkabel 3 dieser Ausführungsform von der Medienzuführung bis zu seinem anderen Ende versehen ist. Das Schweißstromkabel 3 dieser Ausführungsform weist zudem elektrisch leitende Kupferlitzen 47 auf, welche im Kabel koaxial zur Ausnehmung 46 angeordnet und mit einem Ende in eine entsprechende Ausnehmung der Kontaktbuchse 19 eingeführt und in dieser angeordnet sind. Die Kupferlitzen 47 sind wiederum von einer ebenfalls zentrisch ausgebildeten Isolierungstülle bzw. Mantel 48 des Schweißstromkabels umgeben. Mit diesem Schweißstromkabel 3 kann somit mittels der Kontaktbuchse 19 Strom und Spannung der Schweißstromquelle auf einen Schweißbrenner, oder auf ein im Schweißkreis befindliches Gerät, übertragen und ein Schutzgas dem Schweißbrenner zugeführt werden. Eine lösbare Verbindung zwischen der Schweißstromquelle und dem Schweißstromkabel kann mit einer identischen Bajonettverbindung wie im Ausführungsbeispiel der Fig. 2 bis 5 erfolgen, deren schweißstromkabelseitiger Bestandteil, nämlich der Überwurfmutter 10 und ihren Nocken 36 für rotative Bewegungen und Belastungen vom Schweißstromkabel 3 selbst entkoppelt sind. Dadurch ist auch das Schweißstromkabel 3 von rotativen Bewegungen der Überwurfmutter 10 entkoppelt. Es wird diesbezüglich auf die entsprechenden Figuren und Beschreibungen zu den Fig. 1 bis 5 Bezug genommen.

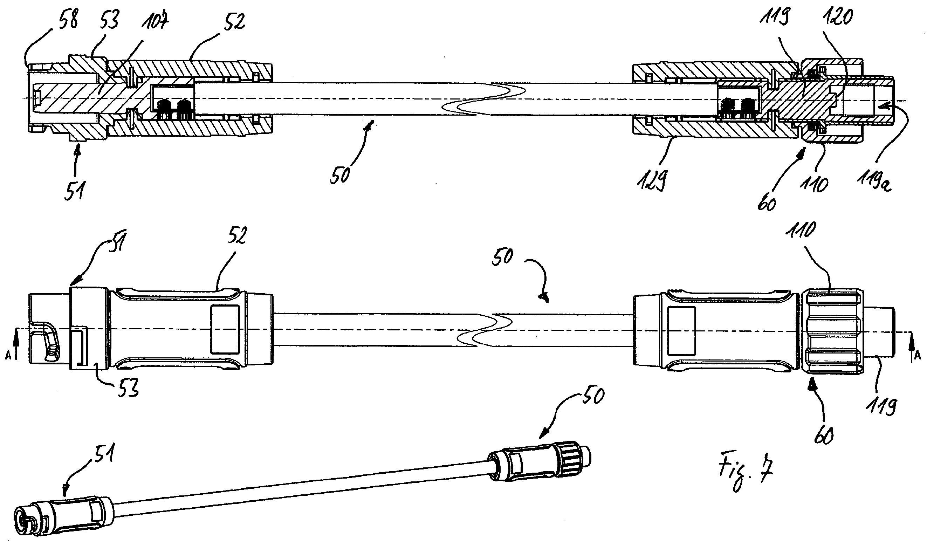

In Fig. 7 ist ein weiteres bevorzugtes Ausführungsbeispiel gezeigt. Hierbei handelt es sich um ein als Verlängerungskabel 50 ausgebildetes Schweißstromkabel. Ein solches Verlängerungskabel 50 kann beispielsweise dazu vorgesehen sein, ein Schweißstromkabel, wie es in Fig. 4 gezeigt ist, zu verlängern. Ein Anwendungsfall für ein solches Verlängerungskabel 50 kann beispielsweise sein, daß das Schweißstromkabel aus Fig. 4 für einen Anschluß einer Schweißstromquelle an einer Komponente eines Schweißstromkreises zu kurz ist. Mit einem Verlängerungskabel 50 kann dann eine größere Distanz zwischen einer Polkontakteinrichtung 5, 6 einer Schweißstromkreiskomponente, beispielsweise einen Lichtbogenschweißbrenner, überbrückt werden. Das Verlängerungskabel 50 weist hierzu an einem seiner Enden einen Steckeranschluß 51 auf, dessen Geometrie und Form dem Steckerteil der Polkontakteinrichtung entspricht, wie sie in den Fig. 2 und 3 dargestellt ist. Der Steckeranschluß 51 entspricht hierbei im wesentlichen dem Gehäuseteil 8 und dem Kontaktstift 7 der Polkontakteinrichtung aus Fig 2 und 3. Am Ende des Kabels und im Bereich des Steckeranschlußes 51 ist das Verlängerungskabel 50 zudem mit einer Griffhülse 52 versehen, die zwei miteinander verbundenen Griffschalen aufweist und ähnlich der Griffhülse 29 aus Fig. 4 und 5 ausgebildet ist. Die auf den Mantel des Schweißstromkabels geklemmte Griffhülse 52 erfasst an ihrer Stirnseite das Gehäuseteil 53 des Steckeranschlußes 51 und fixiert dieses in Bezug auf den Mantel des Verlängerungskabels 50 rotationsfest am Mantel.

Der Kontaktstift 107 des Steckeranschlußes 51 weist an seiner kabelseitigen Stirnseite eine Ausnehmung 54 auf, in der das abisolierte Ende des Kabels angeordnet und mittels einer Aderendhülse und Schrauben an den Kontaktstift 107 geklemmt ist. Das andere Ende des Kontaktstifts 107 ragt in das Gehäuseteil 53 hinein, so daß das Gehäuseteil 53 den Kontaktstift 107 konzentrisch umgibt. Das Ende des Kontaktstifts 107 ist gegenüber der Stirnseite 58 des Gehäuseteils 53 nur geringfügig zurückversetzt.

An seinem anderen Ende ist das Verlängerungskabel 50 mit einem Buchsenanschluß 60 versehen, der dem Buchsenanschluß des Schweißstromkabels aus Fig. 4 und 5 entspricht. Insbesondere sowohl die hier verwendete Überwurfmutter 110, als auch die Griffhülse 129 und die Kontaktbuchse 119 sind mit den entsprechenden Bauteilen aus dem Ausführungsbeispiel gemäß den Fig. 4 und 5 identisch. Auch hier ist die Überwurfmutter 110 relativ zum Mantel des Verlängerungskabels 50 rotierbar. Wie Fig. 7 entnommen werden kann, ragt wie beim Ausführungsbeispiel gemäß den Fig. 4 und 5 die Kontaktbuchse 119 über die Stirnseite der Überwurfmutter 110 des Steckeranschlußes hinaus. Im Bereich der über die Überwurfmutter hinausragenden Stirnseite weist die Kontaktbuchse 119 eine Sacklochbohrung 119a auf, an deren Stirnfläche ein Zapfen 120 ausgebildet ist.

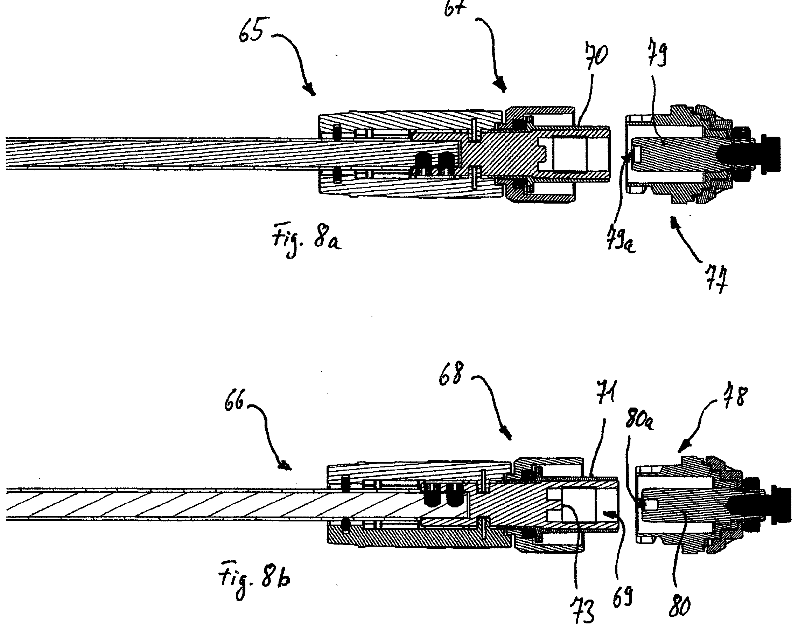

In den Fig. 8a, 8b sind Endbereiche von zwei Schweißstromkabeln 65, 66 gezeigt, die jeweils mit einem Buchsenanschluß 67, 68 versehen sind. Der Buchsenanschluß 67 der Fig. 8a entspricht hier vollständig dem Buchsenanschluß aus den Fig. 4 und 5. Der Buchsenanschluß 68 der Fig. 8b unterscheidet sich hingegen bezüglich der geometrischen Form der Stirnseite ihrer Sacklochbohrung 69 der Kontaktbuchse 71. Im Unterschied zur Kontaktbuchse 70 aus der Fig. 8a ist bei der Kontaktbuchse 71 der zylindrische Zapfen 73 in axialer Richtung mit einer größeren Länge versehen und weist einen kleineren Durchmesser als der Zapfen 20 aus der Fig. 5 und der Zapfen aus Fg. 8a auf. Bei beiden Ausführungsformen aus den Fig. 8a und 8b ist die jeweilige Überwurfmutter relativ zum Mantel des Schweißstromkabels endlos drehbar.

Jeder der beiden Kontaktbuchsen 70, 71 ist ein Steckeranschluß 77, 78 zugeordnet, dessen jeweiliger Kontaktstift 79, 80 kongruent zur dazugehörenden Kontaktbuchse 70, 71 ausgebildet ist. Hierbei ist insbesondere die an der freien Stirnseite eingebrachte Ausnehmung 79a, 80a des jeweiligen Kontaktstifts 79, 80 an die geometrische Form des jeweiligen Zapfens 72, 73 bezüglich Länge und Durchmesser angepaßt. Hierdurch kann jeder der beiden Buchsenanschlüsse 67, 68 nur an den ihm zugeordneten Steckeranschluß 77, 78 in eine Position eingefügt werden, in welcher der Nocken der jeweiligen Überwurfmutter in die Nut des Gehäuseteils eingeführt und in die jeweilige Rastposition überführt werden kann. Somit sind diese Buchsen-/Steckerverbindungen kodiert, wodurch eine Vertauschung der Steckeranschlüsse mit den jeweiligen Buchsenanschlüssen des anderen Typs nicht möglich ist. Sind die beiden Polkontakteinrichtungen mit jeweils einer der beiden und damit unterschiedlichen Buchsenanschlüsse versehen, kann eine Vertauschung des Masseschweißstromkabels und des Schweißstromkabels für den Pluspol der Schweißstromquelle beim Anschluß an die jeweilige Polkontakteinrichtung 5, 6 ausgeschlossen werden.

Wie unter anderem in Fig. 1 zu erkennen ist, steht der obere Abschnitt 4a des Gehäuses 4 an beiden Seiten des Gehäuses in Bezug auf den schmalen vorderen Teils 130 der T-Form des unteren Gehäuseabschnitts 4b über. Hinsichtlich des hinteren, breiteren Teils 131 der T-Form des unteren Gehäuseabschnitts 4b, weist der obere Gehäuseabschnitt 4a eine Breite auf, die zumindest in etwa der Breite des hinteren, breiteren Teils 131 des unteren Gehäuseabschnitts 4b entspricht. Durch diese Ausgestaltung ergibt sich an den Seiten des Gehäuses 4 jeweils ein Bereich des oberen Gehäuseabschnitts 4a, bei dem eine Unterseite 132 des überstehenden Teils des oberen Gehäuseabschnitts durch eine Gehäuseabdeckung, hier ein Gehäuseblech 133, 134, abgedeckt und diese frei zugänglich ist. Diese beiden Bereiche der Unterseite 132 des oberen Gehäuseabschnitts 4a sind im Ausführungsbeispiel rechteckförmig und von der Vorderseite sowie von jeweils einer Seite des Gehäuses 4 für einen Zugriff frei zugänglich. Diese beiden Bereiche der Unterseite 132 des oberen Gehäuseabschnitts 4a sind durch den schmalen Teil der T-Form des unteren Gehäuseabschnitts voneinander getrennt. An jeder der beiden Bereiche der Unterseite 132 des oberen Gehäuseabschnitts 4a ist jeweils eine der beiden Polkontakteinrichtungen 5, 6 angeordnet, so daß sich an jedem dieser beiden Bereiche jeweils nur eine der Polkontakteinrichtungen 5, 6 befindet. Die beiden Polkontakteinrichtungen 5, 6 ragen somit an der Unterseite 132 des oberen Gehäuseabschnitts 4a aus dem Gehäuse 4 der bevorzugten erfindungsgemäßen Schweißstromquelle heraus.

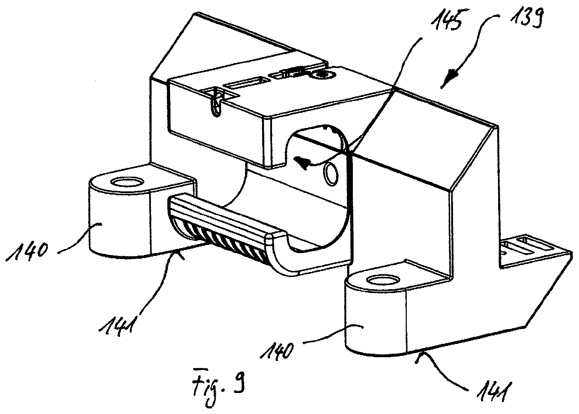

An seiner Unterseite ist das Gehäuse 4 mit einem mehrteiligen, nämlich zweiteiligen, Aufstellelement 138 versehen. Im Ausführungsbeispiel sind die beiden Teile 139 des Aufstellelements 138, von denen eines in Fig. 9 dargestellt ist, identisch. Jedes der beiden Teile 139 des Aufstellelements 138 ist an eine der Seiten des Gehäuses 4 angefügt und dort befestigt. Das Aufstellelement 138 ist mit vier Fußelementen 140 versehen, die jeweils an einer Ecke der rechteckförmigen Grundform des Aufstellelements 138 angeordnet sind. Jedes der vier Fußelemente 140 weist als Unterseite jeweils eine ebene Aufstandsfläche 141 (Fig. 1) auf, mit welcher das jeweilige Fußelement 140 auf einem geeigneten Untergrund aufsteht, wie beispielsweise einem Boden einer Fertigungshalle. Sämtliche Aufstandsflächen 141 befinden sich in der gleichen zweidimensionalen Ebene, nämlicher einer Aufstellebene/-fläche. Die Aufstellfläche ist mit der Oberfläche, des in der Regel ebenen Untergrunds identisch, auf welcher die Schweißstromquelle zur Aufstellung vorgesehen ist. Innerhalb der Aufstellfläche befindet sich auch der sogenannte Footprint der Schweißstromquelle. Beim Footprint handelt sich um eine zur Aufstellfläche senkrechten Projektion der Schweißstromquelle 1 auf die Aufstellfläche. Die Größe des Footprints ergibt sich somit - in Bezug auf einer Draufsicht auf die Schweißstromquelle 1 - durch die äußere Kontur der Schweißstromquelle.

Die beiden Bereiche der Unterseite 132 des oberen Gehäuseabschnitts sind im dargestellten bevorzugten Ausführungsbeispiel der Erfindung zumindest im wesentlichen parallel zu den Aufstandsflächen 141 und zur Aufstellfläche ausgerichtet. Zudem weisen die beiden Bereiche der Unterseite 132 des oberen Gehäuseabschnitts einen relativ großen Abstand zu den Aufstandsflächen 141 auf, der sich aus der Höhe des unteren Gehäuseabschnitts 4b sowie des Aufstellelements 138 ergibt. Die Polkontakteinrichtungen 5, 6 sind hierdurch trotzt ihrer Anordnung an den beiden Bereichen der Unterseite des oberen Gehäuseabschnitts gut zugänglich.

Die Polkontakte der Polkontakteinrichtungen 5, 6 sind jeweils in Form eines im wesentlichen zylindrischen Kontaktstifts 7 ausgebildet. Eine Längsachse des jeweiligen Kontaktstifts ist dabei im wesentlichen senkrecht zur Fläche der Unterseite 132 und zur Aufstellfläche ausgerichtet, an welcher sie angeordnet ist. Die Längsachsen der Kontaktstifte 7 der beiden Polkontakteinrichtungen 5, 6 verlaufen somit parallel zueinander.

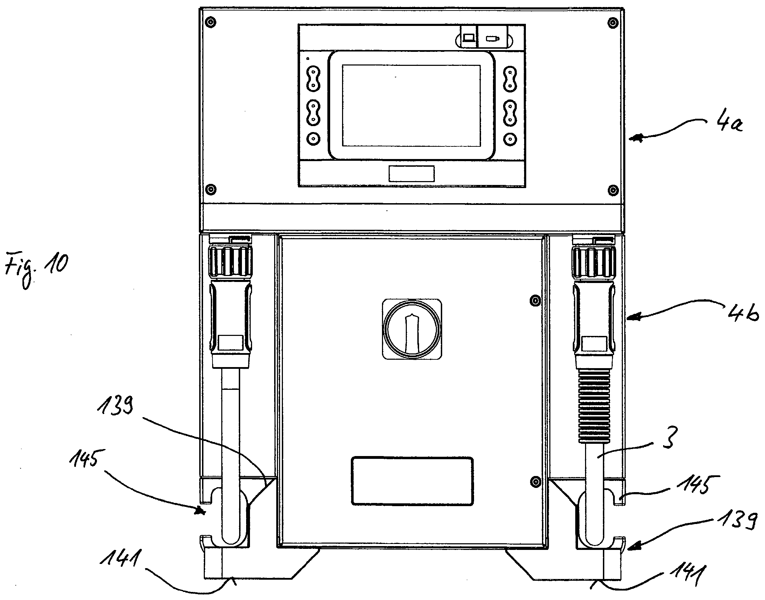

Eine erfindungsgemäße Schweißstromquelle kann vorzugsweise auch eine Einrichtung zur Führung von zumindest einem der Schweißstromkabel aufweisen. Vorzugsweise ist die Schweißstromquelle 1 mit einer Kabelführungseinrichtung versehen, die für jedes der beiden Schweißstromkabel 3 zumindest ein separates Kabelführungsmittel 145 vorsieht. Mit den Kabelführungsmitteln 145 können die Schweißstromkabel 3 in vorbestimmter Weise am Gehäuse der Schweißstromquelle 1 geführt sein, so daß das jeweilige Schweißstromkabel 3 an einer vorbestimmten Stelle aus der Kontur des Gehäuses 4 austritt. In der Ausführungsform von Fig. 1 bis 13 ist auf jeder Stirnseite der Schweißstromquelle 4 am Aufstellelement 138 das kanalartige Kabelführungsmittel 145 angeordnet. Das kanalartige Kabelführungsmittel 145 befindet sich am Aufstellelementteil 139 zwischen dessen beiden Fußelementen 140 und ist an seinen beiden Stirnseiten zur Durchführung eines Schweißstromkabels offen. Ebenso sind beide kanalartigen Kabelführungsmittel 145 jeweils seitlich mit einem über die gesamte Länge des Kabelführungsmittels 145 durchgehenden Schlitz versehen, durch den ein Schweißstromkabel 3 seitlich in das kanalartige Kabelführungsmittel 145 eingeführt werden kann. Wie insbesondere aus der Vorderansicht von Fig. 10 ersichtlich ist, befinden sich die beiden kanalartigen Kabelführungsmittel 145 innerhalb der Kontur der Schweißstromquelle 1. Somit kann das von der jeweiligen Polkontakteinrichtung 5, 6 kommende Schweißstromkabel - bezogen auf eine Projektion auf die Aufstellfläche - ausgehend von der jeweiligen Polkontakteinrichtung 5, 6 bis zur Rückseite der Schweißstromquelle innerhalb des Footprints verlaufen und erst an der Rückseite der Schweißstromquelle aus dem Footprint in vorbestimmter Weise austreten. Das Kabelführungsmittel 145 kann sowohl an einer Innenseite als auch an einer Aussenseite griffenmuldenartig ausgebildet sein, so dass die Schweißstromquelle durch Angreifen am Kabelführungsmittel 145 transportierbar ist.

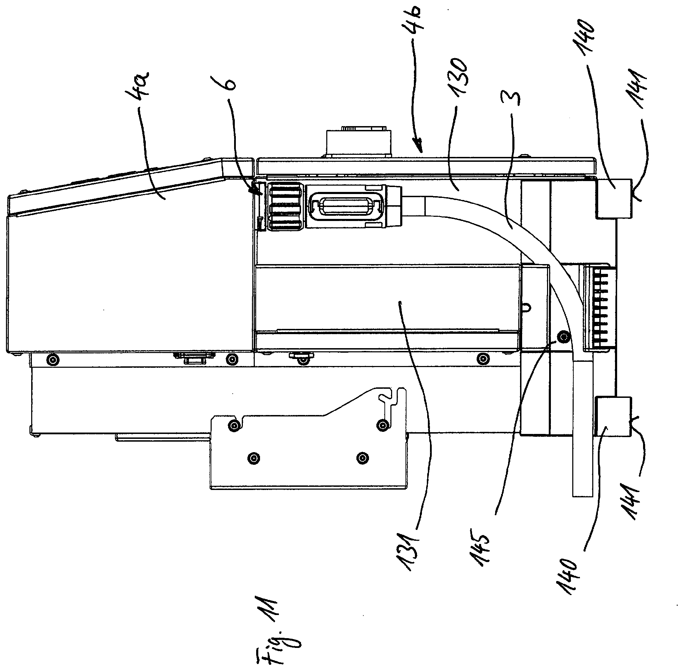

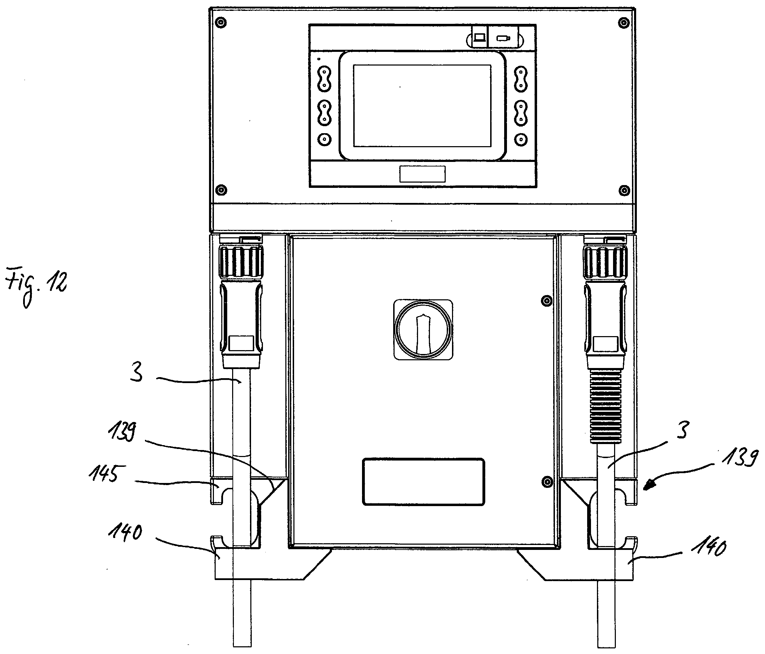

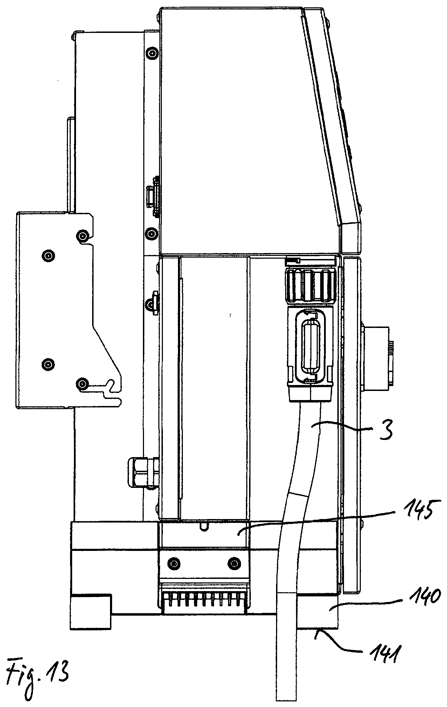

Wie in Fig. 11 gezeigt ist, ist das jeweilige kanalartige Kabelführungsmittel 145 mit Abstand zum vorderen Fußelement 140 des gleichen Aufstellelementeils 139 angeordnet. Dieser offene Bereich zwischen dem Kabelführungsmittel 145 und dem vorderen Fußelement kann als weiteres Kabelführungsmittel genutzt werden, wie es in Fig. 12 und 13 gezeigt ist. Mit Hilfe dieser Kabelführungsmittel kann jedes der beiden Schweißstromkabel innerhalb der Kontur der Schweißstromquelle bis zur Ebene der Aufstandsflächen der Fußelemente geführt und von dort nach unten von bzw. aus der Kontur der Schweißstromquelle herausgeführt werden. Eine solche Lösung kann insbesondere für Anwendungsfälle von Bedeutung sein, in denen die Schweißstromquelle in einer hängenden Position angeordnet ist.

**Bezugszeichenliste**

| | | | |
|---|---|---|---|
| 1 | Schweißstromquelle | 20 | Zapfen |
| 2 | Bedienpanel | 21 | Sacklochausnehmung |
| 3 | Schweißstromkabel | 22 | Absatz |
| 3a | Schutz- und Isolationstülle | 23 | Madenschraube |
| 4 | Gehäuse | 25 | Isolierhülse |
| 4a | oberer Abschnitt | 26 | Absatz |
| 4b | unterer Abschnitt | 27 | Flansch |
| 5 | Polkontakteinrichtungen | 29 | Griffhülse |
| 6 | Polkontakteinrichtungen | 29a | Griffschale |
| 7 | Kontaktstift | 29b | Griffschale |
| 7a | Stirnseite | 30 | Rasthaken |
| 7b | Mantelfläche | 31 | Ausnehmung |
| 8 | Gehäuseteil | 32 | Dichtring |
| 8a | erster Abschnitt | 33 | |
| 8b | zweiter Abschnitt | 35 | Ausdrehung |
| 8c | dritter Abschnitt | 36 | Nocken |
| 10 | Überwurfmutter | 37 | Stirnfläche |
| 10a | Absatz | 38 | Stirnfläche |
| 10b | Innenfläche | 39 | Federelement |
| 11 | hinteres Gehäuseteil | 42 | Medienzuführung |
| 12 | Befestigungsmittel | 43 | Durchführung |
| 14 | nutförmige Ausnehmung | 44 | Zuleitung |
| 15 | Stirnseite | 45 | Sacklochbohrung |
| 17 | Kontakierungs- und Verbin- dungseinrichtung | 46 | zentrische Ausnehmung |
| | | 47 | Kupferlitzen |
| 18 | Aderendhülse | 48 | Isolierungstülle |
| 19 | Kontaktbuchse | 50 | Verlängerungskabel |
| 19a | Sacklochbohrung | 51 | Steckeranschluß |
| 19b | Sacklochbohrung | 52 | Griffhülse |
| 53 | Gehäuseteil | | |
| 54 | Ausnehmung | 107 | Kontaktstift |
| 58 | Stirnseite | 110 | Überwurfmutter |
| 60 | Buchsenanschluß | 119 | Kontaktbuchse |
| 65 | Schweißstromkabel | 119 | Sacklochbohrung |
| 66 | Schweißstromkabel | 120 | Zapfen |
| 67 | Buchsenanschluß | 130 | schmaler vorderer Teil |
| 68 | Buchsenanschluß | 131 | hinterer breiterer Teil |
| 69 | Sacklochbohrung | 132 | Unterseite |
| 70 | Kontaktbuchse | 133 | unteres Gehäuseblech |
| 71 | Kontaktbuchse | 134 | unteres Gehäuseblech |
| 72 | Zapfen | 138 | Aufstellelement |
| 73 | Zapfen | 139 | Teil Aufstellelement |
| 77 | Steckeranschluß | 140 | Fußelement |
| 78 | Steckeranschluß | 141 | Aufstandsfläche |
| 79 | Kontaktstift | 145 | Kabelführungsmittel |
| 79a | Ausnehmung | | |
| 80 | Kontaktstift | | |
| 80a | Ausnehmung | | |

## Patentansprüche

1. Schweißstromquelle (1) zur Versorgung eines Lichtbogenschweißbrenners mit elektrischem Strom und elektrischer Spannung zur Durchführung eines Lichtbogenschweißverfahrens, wobei die Lichtbogenschweißstromquelle mit einem Gehäuse (4) versehen ist, in welcher eine Stromtransformationseinrichtung zur Aufbereitung von in die Schweißstromquelle (1) eingespeisten elektrischen Stroms und Spannung zur Eignung bei einem Lichtbogenschweißverfahren, am Gehäuse (4) der Schweißstromquelle (1) ferner zwei Polkontakteinrichtungen (5, 6) vorgesehen sind, welche jeweils aus dem Gehäuse entlang jeweils einer Längsachse herausragen und mit Verbindungsmittel zur Aufnahme jeweils eines Schweißstromkabels (65, 66) versehen sind,
wobei sich
beide Polkontakteinrichtungen (5, 6) vollständig innerhalb einer Projektionsfläche des Gehäuses (4) auf eine Ebene befinden, in welcher sich eine Aufstellfläche der Schweißstromquelle (1) befindet, wobei die Projektion entlang einer senkrecht zur Aufstellfläche verlaufenden Achse erfolgt,
**dadurch gekennzeichnet, dass**
beide Polkontakteinrichtung (5, 6) mit Verbindungsmitteln versehen sind, die zur Erzeugung und zur Arretierung einer lösbaren Verbindung der jeweiligen Polkontakteinrichtung (5, 6) mit einem Schweißstromkabel (65, 66) unter Einsatz einer Rotationsbewegung um eine Längsachse der jeweiligen Polkontakteinrichtung (5, 6) vorgesehen sind, wobei die Längsachse derart aus dem Gehäuse (4) der Schweißstromquelle (1) austritt, dass die Längsachse in Richtung auf die Ebene der Aufstandsfläche ausgerichtet ist.

2. Schweißstromquelle nach Anspruch 1, **dadurch gekennzeichnet, daß** zumindest eine der Polkontakteinrichtungen (5, 6) an einer Fläche einer Unterseite (132) des Gehäuses (4) angeordnet ist, wobei sich die Unterseite mit Abstand zur Aufstandsfläche des Gehäuses (4) befindet.

3. Schweißstromquelle nach einem der Ansprüche 1 oder 2, **dadurch gekennzeichnet, daß** das Gehäuse (4) zumindest einen unteren Abschnitt (4b) und zumindest einen oberen Abschnitt (4a) aufweist, wobei der obere Abschnitt (4a) einen größeren Abstand als der untere Abschnitt (4b) des Gehäuses (4) zur Ebene der Aufstandsfläche aufweist und der obere Abschnitt (4a) über den unteren Abschnitt (4b) auskragt.

4. Schweißstromquelle nach Anspruch 1, **dadurch gekennzeichnet, daß** an einer Unterseite (132) des zumindest einen auskragenden oberen Abschnitts zumindest eine der Polkontakteinrichtungen angeordnet ist.

5. Schweißstromquelle nach Anspruch 1, **dadurch gekennzeichnet, daß** der obere Abschnitt (4a) des Gehäuses (4) an zwei Seiten des Gehäuses (4) über den unteren Abschnitt (4b) auskragt.

6. Schweißstromquelle nach Anspruch 3, **dadurch gekennzeichnet, daß** an jeder der auskragenden Seiten des Gehäuses (4) an deren jeweiligen Unterseite (132) eine der beiden Polkontakteinrichtungen (5, 6) angeordnet ist.

7. Schweißstromquelle nach Anspruch 3 oder 4, **gekennzeichnet durch** zumindest ein am Gehäuse (4) angeordnetes Kabelführungsmittel (145) für zumindest ein Schweißstromkabel (65, 66), durch welches das Schweißstromkabel (65, 66) zur Rückseite des Gehäuses (4) führbar ist.

8. Schweißstromquelle nach zumindest einem der vorhergehenden Ansprüche, **gekennzeichnet durch** eine Ausrichtung der Längsachse von zumindest einer der Polkontakteinrichtungen (5, 6), bei der die Längsachse der Polkontakteinrichtung (5, 6) mit einer Senkrechten auf die Aufstellfläche einen Winkel aus einem Bereich von 0° bis 45° einschließt.

9. Schweißstromquelle nach zumindest einem der vorhergehenden Ansprüche, **gekennzeichnet durch** zumindest ein mittels einer Kontaktierungs- und Verbindungseinrichtung (17) des Schweißstromkabels (65, 66) an die Polkontakteinrichtung (5, 6) der Schweißstromquelle (1)angeschlossenes stromführendes Kabel (5, 6), wobei sich die Kontaktierungs- und Verbindungseinrichtung (17) des Schweißstromkabels (65, 66) vollständig innerhalb der Projektionsfläche des Gehäuses (4) auf die Ebene befindet, in welcher sich auch die Aufstellfläche der Schweißstromquelle (1) befindet.

## Claims

1. Welding power source (1) for supplying an arc welding torch with electric current and electric voltage for carrying out an arc welding process, the arc welding power source being provided with a housing (4) in which a current transformation device for conditioning electric current and voltage fed into the welding power source (1) for suitability in an arc welding process, two pole contact devices (5, 6) are also provided on the housing (4) of the welding power source (1), which each project from the housing along a respective longitudinal axis and are provided with connecting means for receiving a respective welding power cable (65, 66),
wherein
both pole contact devices (5, 6) are located completely within a projection surface of the housing (4) onto a plane in which an installation surface of the welding power source (1) is located, the projection taking place along an axis running perpendicular to the installation surface,
**characterised in**
both pole contact devices (5, 6) are provided with connecting means which are provided for producing and locking a detachable connection of the respective pole contact device (5, 6) to a welding power cable (65, 66) using a rotational movement about a longitudinal axis of the respective pole contact device (5, 6), the longitudinal axis emerging from the housing (4) of the welding power source (1) in such a way that the longitudinal axis is aligned in the direction of the plane of the contact surface.

2. Welding current source according to claim 1, **characterised in that** at least one of the pole contact devices (5, 6) is arranged on a surface of an underside (132) of the housing (4), the underside being located at a distance from the contact surface of the housing (4).

3. Welding power source according to one of claims 1 or 2, **characterised in that** the housing (4) has at least one lower section (4b) and at least one upper section (4a), the upper section (4a) being at a greater distance than the lower section (4b) of the housing (4) from the plane of the contact surface and the upper section (4a) projecting beyond the lower section (4b).

4. Welding power source according to claim 1, **characterised in that** at least one of the pole contact devices is arranged on an underside (132) of the at least one projecting upper section.

5. Welding power source according to claim 1, **characterised in that** the upper section (4a) of the housing (4) projects beyond the lower section (4b) on two sides of the housing (4).

6. Welding current source according to claim 3, **characterised in that** one of the two pole contact devices (5, 6) is arranged on each of the projecting sides of the housing (4) on their respective underside (132).

7. Welding power source according to claim 3 or 4, **characterised by** at least one cable guide means (145) arranged on the housing (4) for at least one welding power cable (65, 66), through which the welding power cable (65, 66) can be guided to the rear of the housing (4).

8. Welding power source according to at least one of the preceding claims, **characterised by** an alignment of the longitudinal axis of at least one of the pole contact devices (5, 6), in which the longitudinal axis of the pole contact device (5, 6) encloses an angle from a range of 0° to 45° with a perpendicular to the installation surface.

9. Welding power source according to at least one of the preceding claims, **characterised by** at least one current-carrying cable (5, 6) connected to the pole contact device (5, 6) of the welding power source (1) by means of a contacting and connecting device (17) of the welding power cable (65, 66), wherein the contacting and connecting device (17) of the welding power cable (65, 66) is located completely within the projection surface of the housing (4) onto the plane in which the installation surface of the welding power source (1) is also located.

## Revendications

1. Source de courant de soudage (1) pour l'alimentation d'une torche de soudage à l'arc en courant électrique et en tension électrique pour la mise en oeuvre d'un procédé de soudage à l'arc, la source de courant de soudage à l'arc étant pourvue d'un boîtier (4) dans lequel est logé un dispositif de transformation de courant pour la préparation du courant et de la tension électriques injectés dans la source de courant de soudage (1) en vue de leur utilisation dans un procédé de soudage à l'arc, sur le boîtier (4) de la source de courant de soudage (1) sont en outre prévus deux dispositifs de contact polaire (5, 6) qui dépassent chacun du boîtier le long d'un axe longitudinal respectif et qui sont pourvus de moyens de connexion pour recevoir chacun un câble de courant de soudage (65, 66), dans lequel
les deux dispositifs de contact polaire (5, 6) se trouvent entièrement à l'intérieur d'une surface de projection du boîtier (4) sur un plan dans lequel se trouve une surface d'installation de la source de courant de soudage (1), la projection s'effectuant le long d'un axe s'étendant perpendiculairement à la surface d'installation,
caractérisé en
les deux dispositifs de contact polaire (5, 6) sont pourvus de moyens de connexion qui sont prévus pour créer et pour bloquer une connexion amovible du dispositif de contact polaire respectif (5, 6) avec un câble de courant de soudage (65, 66) en utilisant un mouvement de rotation autour d'un axe longitudinal du dispositif de contact polaire respectif (5, 6), l'axe longitudinal sortant du boîtier (4) de la source de courant de soudage (1) de telle sorte que l'axe longitudinal est orienté en direction du plan de la surface d'appui.

2. Source de courant de soudage selon la revendication 1, **caractérisée en ce qu'**au moins l'un des dispositifs de contact polaire (5, 6) est disposé sur une surface d'une face inférieure (132) du bo tier (4), la face inférieure étant située à distance de la surface d'appui du bo tier (4).

3. Source de courant de soudage selon l'une des revendications 1 ou 2, **caractérisée en ce que** le boîtier (4) comporte au moins une partie inférieure (4b) et au moins une partie supérieure (4a), la partie supérieure (4a) étant située à une distance plus grande que la partie inférieure (4b) du boîtier (4) par rapport au plan de la surface d'appui et la partie supérieure (4a) étant en porte-à-faux par rapport à la partie inférieure (4b).

4. Source de courant de soudage selon la revendication 1, **caractérisée en ce qu'**au moins l'un des dispositifs de contact de pôle est disposé sur une face inférieure (132) de ladite au moins une partie supérieure en porte-à-faux.

5. Source de courant de soudage selon la revendication 1, **caractérisée en ce que** la partie supérieure (4a) du boîtier (4) est en porte-à-faux par rapport à la partie inférieure (4b) sur deux côtés du boîtier (4).

6. Source de courant de soudage selon la revendication 3, **caractérisée en ce qu'**un des deux dispositifs de contact de pôle (5, 6) est disposé sur chacun des côtés en porte-à-faux du bo tier (4) sur leur côté inférieur respectif (132).

7. Source de courant de soudage selon la revendication 3 ou 4, **caractérisée par** au moins un moyen de guidage de câble (145) disposé sur le bo tier (4) pour au moins un câble de courant de soudage (65, 66), à travers lequel le câble de courant de soudage (65, 66) peut être guidé vers l'arrière du bo tier (4).

8. Source de courant de soudage selon au moins l'une des revendications précédentes, **caractérisée par** une orientation de l'axe longitudinal d'au moins l'un des dispositifs de contact polaire (5, 6), dans laquelle l'axe longitudinal du dispositif de contact polaire (5, 6) forme avec une perpendiculaire à la surface d'installation un angle compris dans une plage de 0° à 45°.

9. Source de courant de soudage selon au moins l'une des revendications précédentes, **caractérisée par** au moins un câble conducteur de courant (5, 6) raccordé au moyen d'un dispositif de mise en contact et de connexion (17) du câble de courant de soudage (65, 66) au dispositif de contact polaire (5, 6) de la source de courant de soudage (1), le dispositif de mise en contact et de connexion (17) du câble de courant de soudage (65, 66) se trouvant entièrement à l'intérieur de la surface de projection du bo tier (4) sur le plan dans lequel se trouve également la surface d'installation de la source de courant de soudage (1).
